# EUROPEAN PATENT SPECIFICATION

(11) **EP 1 603 743 B1**
(45) Date of publication and mention of the grant of the patent: **10.03.2010**
(21) Application number: 04719007.9
(22) Date of filing: 10.03.2004
(51) Int. Cl.: B32B 15/08, B29C 70/84, B32B 3/22, E04B 1/94, E04C 2/292

(54) **STRUCTURAL SANDWICH PLATE MEMBERS**
STRUKTURELLE SANDWICHVERBUNDPLATTENELEMENTE
ELEMENTS DE PLAQUES SANDWICH STRUCTURELS AMELIORES

(30) Priority: 18.03.2003 GB 0306195
(43) Date of publication of application: 14.12.2005
(73) Proprietor: Intelligent Engineering (Bahamas) Limited, Nassau (BS)
(72) Inventor: KENNEDY, Stephen, John, Ottawa, Ontario K1Y 0N2 (CA)
(74) Representative: Leeming, John Gerard
(86) International application number: PCT/GB2004/001003
(87) International publication number: WO 2004/082928

(56) References cited:
- WO-A-01/32414
- WO-A-03/080330
- DE-A- 3 938 169
- GB-A- 2 348 217
- US-A1- 2001 035 266
- US-B1- 6 412 243

## Description

The present invention relates to structural sandwich plate members which comprise two outer plates and a core of plastics or polymer material bonded to the outer plates with sufficient strength to substantially contribute to the structural strength of the member.

Structural sandwich plate members are described in US 5,778,813 and US 6,050,208 and comprise outer metal, e.g. steel, plates bonded together with an intermediate elastomer core, e.g. of unfoamed polyurethane. These sandwich plate systems may be used in many forms of construction to replace stiffened steel plates and greatly simplify the resultant structures, improving strength and structural performance (stiffness, damping characteristics) while saving weight. Further developments of these structural sandwich plate members are described in WO 01/32414, and US 2001/0035256 A. As described therein, foam forms may be incorporated in the core layer to reduce weight and transverse metal sheer plates may be added to improve stiffness.

According to the teachings of WO 01/32414 the foam forms can be either hollow or solid. Hollow forms generate a greater weight reduction and are therefore advantageous. The forms described in that document are not confined to being made of light weight foam material and can also be make of other materials such as wood or steel boxes.

International Patent Application WO 02/078948 is a further development of the concept of including hollow forms and describes forms that are easy to manufacture and assemble, in particular hollow elongate forms made from snap-together pieces are described.

The basic forms of structural sandwich plate members described in US 5,778,813 and US 6,050,208 have excellent fire resistance properties, such plate members of dimensions suitable for ship building purposes easily pass International Maritime Organisation (IMO) Safety of Life at Sea (SOLAS) A-60 fire tests, even without additional insulation. However, plate members such as those described in WO 01/32414 and WO 02/078948 do not pass these tests without additional insulation on the side exposed to the fire. Without such insulation the temperature of the unexposed side rapidly rises.

It is an aim of the present invention to provide structural sandwich plate members including lightweight forms within the core that have improved fire resistance and preferably can meet prescribed fire resistance test.

According to the present invention, there is provided : a structural sandwich plate member and a method of making such a member as defined in the appended claims.

The present inventors have determined that prior art structural sandwich plate members with lightweight forms made of foam fail fire tests because the foam melts quickly leaving relatively large voids extending between the faceplates of the panel. Where the lightweight form is hollow, the voids exist from the outset. The air and other gasses in those voids can then conduct heat to the panel on the side away from the fire. By making the lightweight forms out of a fire resistant material, specifically mineral wool, this is avoided. The form does not melt and so there is no large open void across which heat can be conducted by convection.

Preferably the lightweight form should be made of a material having an ignition point and a melting point higher than 1000 C.

In a preferred embodiment of the invention, the lightweight foam comprises fire resistant material encased in a barrier impermeable to the liquid form of said plastics or polymer material.

With this arrangement, the plate member can be made by injection molding after placement of the lightweight forms in a cavity made by the two outer plates, as described in WO 01/32414 and WO 02/078948. The barrier prevents the liquid plastics or polymer material soaking into the insulating material. For example, the lightweight forms may comprise a preformed type, made of solid plastic, foam, metal or other material, into which the insulated material is placed. In that case, the form may be constructed as in any of the embodiments described in WO 02/078948. Alternatively, the insulating material may be shaped to the required geometry and sprayed or dipped in a coating material which hardens to provide the outer layer. A further alternative is to wrap the insulating material in a thin outer layer such as metal foil, felt or mineral cloth.

The insulating material is preferably mineral wool and may have a density in the range of from 30 kg/m³ to 200kg/m³.

It should be noted that the lightweight forms serve to reduce the mass of the structural sandwich plate member and need not contribute significantly to its structural strength. The principal requirements on the lightweight forms are that they are of lower density than the plastics or polymer material forming the core and have sufficient thermal and mechanical properties to maintain the desired shape during injection and curing of the plastics or polymer core. The layout of the forms within the core may be as described in WO 03/101728.

The materials; dimensions and general properties of the outer plates of the structural sandwich plate member of the invention may be chosen as desired for the particular use to which the structural sandwich plate member is to be put and in general may be as described in US-5,778, 813 and US-6,050, 208. Steel or stainless steel is commonly used in thicknesses of 0.5 to 20mm and aluminium may be used where light weight is desirable. Similarly, the plastics or polymer core may be any suitable material, for example an elastomer such as polyurethane, as described in US-5,778, 813 and US-6,050, 208.

The present invention will be described below with reference to exemplary embodiments and the accompanying schematic drawings, in which :
Figure 1 is a plan cross-sectional view of a structural sandwich plate member according toa first embodiment of the present invention;
Figure 2 is a cross-sectional view of a structural sandwich plate member according to a second embodiment of the present invention ; and
Figure 3 is a cross-sectional view of a structural sandwich plate member according to a third embodiment of the present invention.

In the various drawings, like parts are indicated by like reference numerals.

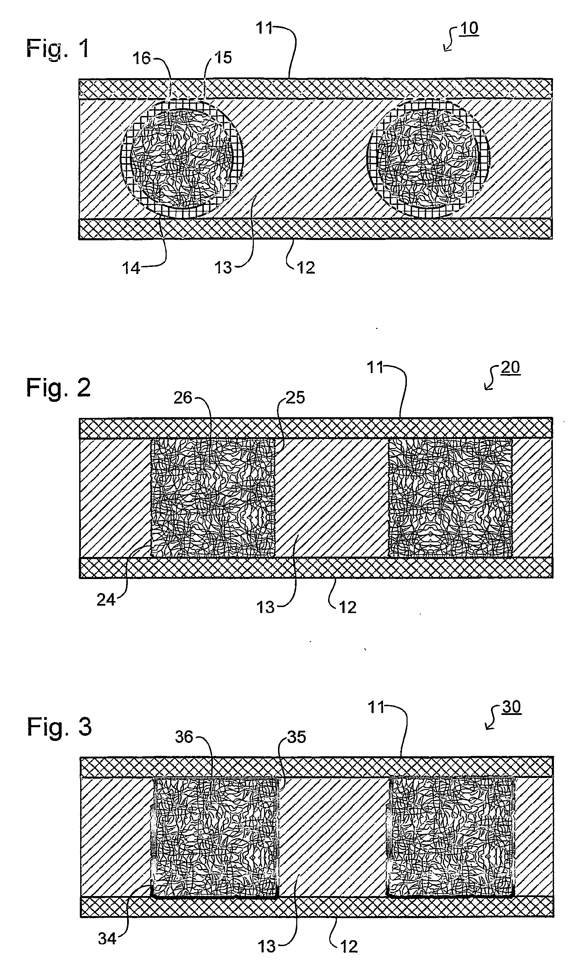

The structural sandwich plate member shown in Figure 1 comprises upper and lower outer plates (faceplates) 11,12 which may be of steel and have a thickness of e. g. in the range of from 0.5 to 20mm. Edge plates are welded between the faceplates 11,12 around their outer peripheries to form a closed cavity. In the cavity between the faceplates 11,12 is a core 13 of plastics or polymer material, preferably a compact (i. e. unfoamed) polyurethane elastomer. This core may have a thickness in the range of from 15 to 200mm; in the present application 160mm is suitable. The core 13 is bonded to the faceplates 11, 12 with sufficient strength and has sufficient mechanical properties to transfer shear forces expected in use between the two faceplates. The bond strength between the core 13 and faceplates 11,12 should be greater than 3MPa, preferably 6MPa, and the modulus of elasticity of the core material should be greater than 250MPa. For low load applications, such as floor panels, where the typical use and occupancy loads are of the order of 1.4kPa to 7.2kPa, the bond strength may be lower, e.g. Approximately 1MPa. By virtue of the core layer, the structural sandwich plate member has a strength and load bearing capacity of a stiffened steel plate having a substantially greater plate thickness and significant additional stiffening.

To reduce the weight of the structural sandwich plate member 10, not all of the volume between the faceplates 11,12 is occupied by core 13. Instead, an array of lightweight forms 14 is provided, occupying a substantial part of the internal volume of the plate member. The lightweight forms 14 do not need to significantly contribute to the structural strength of the plate and they require only to have thermal and mechanical properties sufficient to withstand the pressure of injection of the material to form core 13, the heat from the exothermic reaction of the core during curing and temperatures experienced during fires.

The forms 14 comprise a hollow pipe 15 filled with fire resistant insulting material 16. The pipe 15 serves to prevent the liquid core material during injection molding of the core from soaking into the insulating material which ensures that there is no large void extending through the core material even during fire conditions reducing heat conduction between the faceplates 11,12. The pipe 15, although illustrated as circular in section, may take many other forms, including rectangular, hexagonal, or octagonal sections and may have ribs internally to provide additional strength or externally to space the form away from other forms, the edge plates, or the faceplates. In general, the pipe may take any of the forms described in International patent application WO 02/078148. The insulating material is mineral wool, for example as supplied by Rockwool Limited of Pencoed, Bridgend CF35 6NY, UK. The insulating material may have a density in the range of from 30kg/m³ to 200kg/m³ and preferably has an ignition point and melting point higher than 1000 C, preferably.

To manufacture the structural sandwich plate member 10, the edge plates are welded around the periphery of lower faceplate 11 and then forms 14 and any spacers placed in the resulting open cavity. At this stage, any precast sections of the core may be put in place as well as any shear plates or other fittings that may be desired. Then, the upperfaceplate 12 is welded to the edge plates to form a closed cavity and the plastics or polymer material injected to form core 13. The injected material is then allowed to cure and the injection ports used in the injection step ground off and sealed along with the vent holes. These steps may be performed in situ, or off-site in factory conditions and the finished panel transported to the installation site.

A second embodiment of the present invention is shown in Figure 2. The structural sandwich plate member 20 according to the second embodiment of the invention is similar to the first embodiment but different in the construction of the lightweight forms, as described below.

In the second embodiment, the lightweight forms 24 comprise blocks 26 of insulating material which are formed in the desired shape. As illustrated, the blocks are square in section but may be rectangular, hexagonal, octagonal or other shapes in section and may have a uniform section or vary in cross-section along their lengths. To prevent the liquid core material soaking into the insulating material during injection, the blocks 26 of fire resistant insulating material are sprayed with or dipped in a coating material which hardens to provide an impervious outer layer (25).

Figure 3 illustrates a third embodiment of the present invention which differs from the second embodiment in the manner of formation of the barrier around the insulating materials. In the third embodiment, the lightweight forms 34 comprise blocks 36 of fire resistant insulating material wrapped in a sheet material 35, rather than being coated. The sheet material 35 may, for example, comprise metal foil, felt, mineral cloth or suitable plastics or polymer sheet.

It will be appreciated that the above description is not intended to be limiting and that other modifications and variations fall within the scope of the present invention, which is defined by the appended claims. For example, if the core of the structural sandwich plate member is formed by precast elastomer blocks, the barrier enclosing the fire resistant insulating material may be omitted. Also, where the lightweight forms extend between the faceplates of the structural sandwich plate member it may suffice to provide a barrier only on the sides of the lightweight forms which will come into contact with the core material rather than fully encasing the forms. A separate barrier may also be omitted if the insulating material, or at least a surface region of the form, is sufficiently dense that ingress of liquid core material during molding is limited.

## Claims

1. A structural sandwich plate member comprising:
first and second outer metal plates (11,12);
a core (13) of compact plastics or polymer material bonded to said outer plates with sufficient strength to transfer shear forces therebetween; and
a plurality of forms (14; 24; 36) disposed within said core, said forms being relatively lightweight, compared to an equivalent volume of said compact plastics or polymer material;
**characterised in that** said forms (14; 24; 34) are made of a mineral wool (16; 26; 36).

2. A structural sandwich plate member according to claim 1 wherein each of said forms (14; 24; 34) comprises a barrier (15; 25; 35) impermeable to the liquid form of said plastics or polymer material between said mineral wool and said core.

3. A structural sandwich plate member according to claim 2 wherein said barrier comprises an elongate hollow tube (15) which is filled with said mineral wool.

4. A structural sandwich plate member according to claim 2 wherein said barrier comprises a coating (25) which has been applied to blocks of said mineral wool by spraying or dipping.

5. A structural sandwich plate member according to claim 2 wherein said barrier comprises a sheet material (35) wrapped around said mineral wool.

6. A structural sandwich plate member according to claim 5 wherein said sheet material (35) is selected from the group comprising metal foil, felt, mineral cloth and plastics or polymer sheet materials.

7. A structural sandwich plate member according to any one of the preceding claims wherein said mineral wool (16; 26; 36) has a density in the range of from 30 kg/m³ to 200 kg/m³.

8. A structural sandwich plate member according to any one of the preceding claims wherein said mineral wool (16; 26; 36) has an ignition point and a melting point each greater than 100°C.

9. A method of manufacturing a structural sandwich plate member comprising the steps of:
providing first and second outer metal plates (11, 12) in a spaced-apart relationship with a plurality of forms (14; 24; 34) located therebetween, said forms being relatively lightweight, compared to an equivalent volume of said compact plastics or polymer material;
injecting uncured, unfoamed plastics or polymer material (13) to fill the space defined between said outer plates and said forms; and
allowing said plastics or polymer material to cure to bond said outer plates together with sufficient strength to transfer shear forces therebetween;
**characterised in that** said forms are made of mineral wool (16; 26; 36).

## Patentansprüche

1. Struktursandwichplattenbauteil, mit
einer ersten und einer zweiten äußeren Metallplatte (11, 12);
einem Kern (13) aus kompaktem Kunststoff oder Polymermaterial, der mit den äußeren Platten mit ausreichender Festigkeit zum Übertragen von Scherkräften zwischen ihnen verbunden ist; und
einer Mehrzahl von Formen (14; 24; 36), die innerhalb des Kerns angeordnet sind, wobei die Formen verglichen mit einem äquivalenten Volumen des kompakten Kunststoffs oder des Polymermaterials von geringem Gewicht sind,
**dadurch gekennzeichnet, dass** die Formen (14; 24; 34) aus einer Mineralwolle (16; 26; 36) sind.

2. Struktursandwichplattenbauteil nach Anspruch 1, bei dem jede Form (14; 24; 34) eine Barriere (15; 25; 35) aufweist, die undurchlässig für die Flüssigkeitsform des Kunststoffs oder des Polymermaterials zwischen der Mineralwolle und dem Kern ist.

3. Struktursandwischplattenbauteil nach Anspruch 2, bei dem die Barriere ein längliches hohles Rohr (15) aufweist, das mit der Mineralwolle gefüllt ist.

4. Struktursandwischplattenbauteil nach Anspruch 2, bei dem die Barriere eine Beschichtung (25) aufweist, die durch Sprühen oder Tauchen auf Blocks der Mineralwolle aufgetragen wurde.

5. Struktursandwischplattenbauteil nach Anspruch 2, bei dem die Barriere ein bahnförmiges Material (35) aufweist, das um die Mineralwolle gewickelt ist.

6. Struktursandwischplattenbauteil nach Anspruch 5, bei dem das bahnförmige Material (35) aus der Gruppe ausgewählt ist, die Metallfolie, Filz, mineralischen Stoff und Kunststoff oder Polymerbahnmaterialien umfasst.

7. Struktursandwischplattenbauteil nach einem der vorhergehenden Ansprüche, bei dem die Mineralwolle (16; 26; 36) eine Dichte im Bereich von 30 kg/m³ bis 200 kg/m³ aufweist.

8. Struktursandwischplattenbauteil nach einem der vorhergehenden Ansprüche, bei dem die Mineralwolle (16; 26; 36) einen Zündpunkt und einen Schmelzpunkt aufweist, der jeweils größer als 1000°C ist.

9. Verfahren zum Herstellen eines Struktursandwischplattenbauteils mit den Schritten:
Vorsehen einer ersten und einer zweiten äußeren Metallplatte (11, 12) in einer beabstandeten Beziehung mit einer Mehrzahl von Formen (14; 24; 34), die sich zwischen ihnen befinden, wobei die Formen verglichen mit einem äquivalenten Volumen des kompakten Kunststoffs oder des Polymermaterials von geringem Gewicht sind;
Einspritzen von ungehärtetem, ungeschäumtem Kunststoff oder Polymermaterial (13) zum Füllen des Raums, der zwischen den äußeren Platten und den Formen definiert ist; und
Ermöglichen dem Kunststoff oder dem Polymermaterial, zum Verbinden der äußeren Platten mit einer ausreichenden Stärke zum Übertragen von Scherkräften zwischen ihnen zu härten,
**dadurch gekennzeichnet, dass** die Formen aus Mineralwolle (16; 26; 36) sind.

## Revendications

1. Élément de plaque sandwich structurel comprenant :
des première et seconde plaques métalliques extérieures (11, 12) ;
une âme (13) en plastique ou matériau polymère compact, lié auxdites plaques extérieures avec une force suffisante pour transférer des forces de cisaillement entre elles ; et
une pluralité de formes (14; 24; 36) disposées à l'intérieur de ladite âme, lesdites formes étant relativement légères par rapport à un volume équivalent dudit plastique ou matériau polymère compact ;
**caractérisé en ce que** lesdites formes (14; 24; 34) sont faites d'une laine minérale (16; 26; 36).

2. Élément de plaque sandwich structurel selon la revendication 1, dans lequel chacune desdites formes (14; 24; 34) comprend une protection (15; 25; 35) imperméable à la forme liquide dudit plastique ou matériau polymère entre ladite laine minérale et ladite âme.

3. Élément de plaque sandwich structurel selon la revendication 2, dans lequel ladite protection comprend un tube creux allongé (15) qui est rempli avec ladite laine minérale.

4. Élément de plaque sandwich structurel selon la revendication 2, dans lequel ladite protection comprend un revêtement (25) qui a été appliqué sur des blocs de ladite laine minérale par pulvérisation ou trempage.

5. Élément de plaque sandwich structurel selon la revendication 2, dans lequel ladite protection comprend un matériau en feuille (35) enroulé autour de ladite laine minérale.

6. Élément de plaque sandwich structurel selon la revendication 5, dans lequel ledit matériau en feuille (35) est choisi dans le groupe constitué d'une feuille métallique, de feutre, de voile minéral et de matériaux en feuille de plastique ou polymères.

7. Élément de plaque sandwich structurel selon l'une quelconque des revendications précédentes, dans lequel ladite laine minérale (16; 26; 36) a une densité située dans la plage allant de 30 kg/m³ à 200 kg/m³.

8. Élément de plaque sandwich structurel selon l'une quelconque des revendications précédentes, dans lequel ladite laine minérale (16; 26; 36) possède une température d'inflammation et une température de fusion dont chacune est supérieure à 1000° C.

9. Procédé de fabrication d'un élément de plaque sandwich structurel comprenant les étapes consistant à :
fournir des première et seconde plaques métalliques extérieures (11, 12) selon une relation espacée avec une pluralité de formes (14; 24; 34) disposées entre elles, lesdites formes étant relativement légères par rapport à un volume équivalent dudit plastique ou matériau polymère compact ;
injecter un plastique ou matériau polymère non durci non en mousse (13) pour remplir l'espace défini entre lesdites plaques extérieures et lesdites formes ; et
laisser durcir ledit plastique ou matériau polymère pour lier ensemble lesdites plaques extérieures avec une force suffisante pour transférer les forces de cisaillement entre elles ;
**caractérisé en ce que** lesdites formes sont faites de laine minérale (16; 26; 36).
